# EUROPEAN PATENT APPLICATION

(11) **EP 4 831 803 A1**
(43) Date of publication of application: **28.10.2026**
(21) Application number: 25172628.7
(22) Date of filing: 25.04.2025
(51) Int. Cl.: G06F 9/451, G06Q 10/20

(54) **METHOD AND SYSTEM FOR OPTIMIZING VIRTUAL ASSISTANT OF AUTOMATION SYSTEM**

(71) Applicant: Siemens Aktiengesellschaft, 80333 München (DE)
(72) Inventor: A T, Nutan, 560078 Bangalore (IN); GEHLOT, Shubham, 342026 Jodhpur, Rajasthan (IN); N, Jaykrishna, 641101 Coimbatore (IN); SACHAN, Manish, 208022 Kanpur (IN)
(74) Representative: Patentanwaltskanzlei WILHELM & BECK

(57) **Abstract**

A system (200) and a method (100) for optimizing virtual assistant (220A) of an automation system. The method (100) includes determining, by a processor (204) using the virtual assistant (220A), event associated with configuration of the automation system. The virtual assistant (220A) is embedded in a configuration management application of the automation system. The method includes determining, by the processor (204), configuration parameters associated with the event and determining, by the processor (204), contextual element associated with the event based on the event and the configuration parameters. Further, the method includes applying, by the processor (204), a prompt engineering query to a trained model and delivering, by the processor (204), guidance based on a customized response corresponding to the event generated by the trained model based on the prompt engineering query. The prompt engineering query is generated based on the contextual element.

## Description

The present disclosure relates to virtual assistant of automation system, and more specifically to a method and system for optimizing virtual assistant embedded into a configuration management application of the automation system using generative artificial intelligence and machine learning.

Generally, when a new application such as for example a configuration management application is introduced for an automation system, a major challenge includes understanding technicalities of the configuration management application. Configuration management applications are highly detailed and complex, making them difficult to understand and use effectively. This complexity can overwhelm users, especially those who are not deeply familiar with the technicalities involved. The conventional engineering process associated with the automation system is manual. As a result, this necessitates that an engineer working with the configuration management application to possess a deep understanding of the engineering process or a thorough study of extensive documentation. Any errors in the setup of the automation system costs equipment, life of operators and reputation of the owner organization.

Further, consider an issue or error is encountered while setting up a workflow of the configuration management application due to a software glitch. Then, conventional methods require that the issue or error be reported to customer service team of the configuration management application. However, resolution of the issue or error by the customer service team is a cumbersome and lengthy process involving multiple interactions with the customer service team to gather the necessary information for resolving the issue/error.

Generally, when the configuration management application is introduced or incorporated trainings are provided to the station engineers to help users understand the product's complexities. However, this training addresses only basic scenarios. Specific customer-oriented use cases require special attention and management which are not addressed by such trainings. All configurations are performed by the station engineer who is proficient in the process or has studied numerous documents. For example, consider the automation system is a substation of a power distribution system. Once the configuration management application is set up for the automation system, addressing customer queries promptly and efficiently is crucial. However, comprehensive documentation including technical specifications for all products used in the substation which spans multiple pages, makes navigation difficult. This leads to time-consuming searches, potential errors, and a negative impact on the overall customer experience.

Customers currently rely on the traditional customer service team that lacks streamlined processes. Station engineers often struggle to meet customer needs adequately. The customer service team may not always be in same time zone as the customer, raising concerns about availability and responsiveness. Issue tracking requires the customers to engage repeatedly with the customer service team, leading to frustration and inefficiency. The customer service team often requires logs and files to resolve issues, resulting in delayed communication. Sharing these files might involve sensitive information, posing a risk if leaks occur. Further, the customer service team also requires spending a significant amount of time and effort meticulously reviewing the documentation to understand and resolve the issue. This not only impedes efficiency but also compounds the difficulties in identifying and resolving issues related to the configuration management application, particularly in the absence of a streamlined ticketing system. Furthermore, if any pertinent file is overlooked during this process, the entire procedure must be restarted to obtain the missing document. This adds to the time and effort required, making the process even more cumbersome and inefficient.

In light of the above, there remains a need for optimizing in terms of efficiency and user-friendliness the handling of support for the configuration management applications. There exists a need for a more streamlined and automated approach to managing customer-specific use cases and troubleshooting procedures. This would not only conserve time and effort but also improve the overall user experience with the configuration management application.

The above-mentioned challenges are addressed by the proposed solution by optimizing a virtual assistant which is embedded into the configuration management application. The proposed solution includes identifying events associated with the configuration management application such as for example, a user query related to some workflow or operation of the configuration management application, assistance request, erroneous workflow being executed by the user, etc. These events are identified by the virtual assistant which is embedded into the configuration management application which continuously monitors the user activity on the configuration management application. Further, the virtual assistant extracts configuration parameters related to the event and a context element related to the event based on the configuration parameter. The solution then includes performing context mapping to generate a very optimized prompt engineering query which is applied to a generative artificial intelligence model to generate a customized response for the specific event.

Further, if the user is not satisfied with the response provided by the virtual assistant, then the user can instruct the virtual assistant to automatically generate a ticket which will be sent to relevant team for resolution of the event. As a result, the proposed solution provides a comprehensive virtual assistant which is embedded into the configuration management application which provides details regarding the configuration management application, facilitating the engineering process for setup of the configuration management application, managing issue reporting and resolution, addressing customer queries, and offering traditional support team services.

The object of the present disclosure is achieved by a computer-implemented method for optimizing virtual assistant of an automation system. The method is characterized by determining, by a processor using the virtual assistant, at least one event associated with configuration of the automation system, wherein the virtual assistant is embedded in a configuration management application of the automation system. The method also includes determining, by the processor, configuration parameters associated with the at least one event and determining, by the processor, at least one contextual element associated with the at least one event based on the at least one event and the configuration parameters. Further, the method also includes applying, by the processor, a prompt engineering query to a trained model, wherein the prompt engineering query is generated based on the at least one contextual element and delivering, by the processor, guidance based on a customized response corresponding to the at least one event generated by the trained model based on the prompt engineering query, wherein the guidance provides actionable insights specific to the automation system to enhance the user experience..

In one or more embodiments, the guidance is displayed by the virtual assistant on an interactive user interface of the automation application.

In one or more embodiments, the trained model is a generative artificial intelligence model.

In one or more embodiments, the at least one contextual element is determined by querying a context database comprising a plurality of resources associated with a plurality of events.

In one or more embodiments, the plurality of resources associated with the plurality of events is at least one of automation system data, automation system logs, open editors, historic assistance requests associated with the automation system and corresponding resolution for each of the support request, a list of frequently requested assistance associated with the automation system, logs from a plurality of projects associated with the automation system, test automation suites associated with the automation system, user preference, documentation associated with at least one of: tools of the automation system, features, specifications, guidelines, standards associated with the automation system, protocols, or predefined best practices associated with the associated with the automation system and the automation application.

In one or more embodiments, the at least one event associated with configuration of the automation system is at least one of: a query related to the configuration of the automation system, an assistance request associated with at least one engineering workflow in the configuration management application, and at least one erroneous engineering workflow in the configuration management application.

In one or more embodiments, the virtual assistant embedded to the configuration management application of the automation system monitors each interaction of a user corresponding to the configuration of the automation system, on the configuration management application and determines the at least one event associated with the configuration of the automation system.

In one or more embodiments, the configuration parameters associated with the at least one event is determined based on a machine learning model.

In one or more embodiments, the customized response to the at least one erroneous engineering workflow includes determining, by the processor, at least one corrective action to enable accurate engineering workflow, by the trained model; and recommending by the processor, the determined at least one accurate engineering workflow in real-time.

In one or more embodiments, the method further includes determining, by the processor, the at least one event is unresolved based on a conversation between the user and the virtual assistant; and generating, by the processor, a customer support ticket based on the customized response generated by the trained model, wherein the customer support ticket comprises at least one log corresponding to the at least one event and other relevant data to accelerate resolution of the at least one event.

In one or more embodiments, the method further includes regenerating, by the processor, the configuration of the automation system based on the customized response generated by the trained model, wherein the regenerated configuration optimizes the automation system to reduce manual effort and mitigate errors.

In one or more embodiments, the method further includes determining, by the processor, at least one appropriate event resolution team based on the at least one event and the conversation of the user; and assigning, by the processor, the customer support ticket for resolution of the at least one event, to the at least one appropriate event resolution team.

The object of the present disclosure is also achieved by a system for optimizing virtual assistant of an automation system. The system includes an application interface of a configuration management application of the automation system; a processor; and a memory coupled to the processor. The memory comprises a library of logic instruction blocks and instructions which, when executed by the processor, configures the processor to determine using the virtual assistant at least one event associated with configuration of the automation system, wherein the virtual assistant is embedded in a configuration management application of the automation system. The processor is configured to determine configuration parameters associated with the at least one event and determine at least one contextual element associated with the at least one event based on the at least one event and the configuration parameters. The processor is further configured to apply a prompt engineering query to a trained model, wherein the prompt engineering query is generated based on the at least one contextual element; and deliver a guidance based on a customized response corresponding to the at least one event generated by the trained model based on the prompt engineering query, wherein the guidance provides actionable insights to the automation system to enhance user experience.

The object of the present disclosure is further achieved by a computer program code which, when executed by a processor, causes the processor to carry out steps of the aforementioned method.

The object of the present disclosure is further achieved by a computer program product comprising computer program code which, when executed by a processor, causes the processor to carry out steps of the aforementioned method.

Still other aspects, features, and advantages of the disclosure are readily apparent from the following detailed description, simply by illustrating a number of particular embodiments and implementations, including the best mode contemplated for conducting the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a flowchart representation of a computer-implemented method for optimizing virtual assistant of an automation system, in accordance with one or more embodiments of the present disclosure;
- FIG 2: is a block diagram representation of a system for optimizing the virtual assistant of the automation system, in accordance with one or more embodiments of the present disclosure; and
- FIG 3: is an exemplary flow of the method for response generation and automatic ticket generation by the virtual assistant of the automation system, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for optimizing virtual assistant of an automation system are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

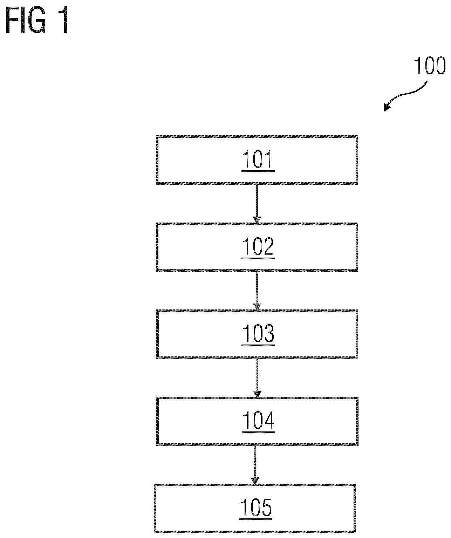

Referring now to FIG 1, illustrated is a flowchart of a method (as represented by reference numeral 100) for optimizing the virtual assistant of the automation system, in accordance with an embodiment of the present disclosure. As used herein, optimizing the virtual assistant of the automation system refers to enabling the virtual assistant to intelligently produce customized responses for various scenarios based on the context of the event associated with the configuration of the automation system using a trained model such as for example a generative artificial intelligence model. The proposed solution includes identifying the events associated with configuration, by the virtual assistant, which is embedded into the configuration management applicant, determining configuration parameters that are relevant to the said event and determine contextual elements or resources that correspond to the event and using the configuration parameters. The contextual elements are then used to generate a prompt engineering query to the trained model. The trained model then generates customized response that is relevant to the specific event associated with the configuration and not just provide general responses. Further, if the user is not satisfied with the response or wants to go further with respect to the event, then the virtual assistant also automatically generates the ticket and allocated it to the relevant support teams. This approach aims to enhance the efficiency of the way in which the virtual assistants of the configuration management applications operate. Rather than restricting the use of virtual assistant to just being a chatbot providing standard response to a set of know queries, the proposed solution enables the virtual assistant to generate customized responses relevant for the event and also perform various actions seamlessly such as automatic configuration or modification to erroneous configuration workflows based on recommendation, etc. This approach also reduces the time required configuring the automation system with efficiency.

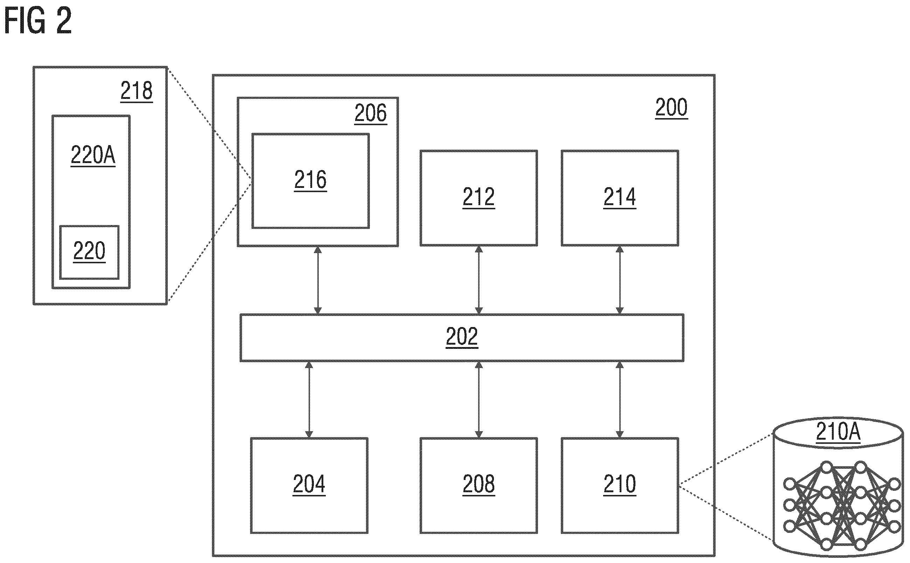

Referring to FIG 2, illustrated is a block diagram of a system 200 for optimizing the virtual assistant of the automation system, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection. The communication interfaces may also include industrial ethernet, Institute of Electrical and Electronic Engineers (IEEE) 802.3 (ENET), IEEE 802.11 (WIFI), Bluetooth, Time Division Multiplex (TDM), Data Over Cable System Interface Specification (DOCSIS), Internet Protocol (IP), General Packet Radio Service Transfer Protocol (GTP), etc.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 may be designed using relational or non-relational database management systems, depending on the specific requirements and preferences of the system 200. The database 210 is operationally coupled to a trained model 210A configured to optimize the virtual assistant 220A of the automation system. In an embodiment the trained model 210A is a generative artificial intelligence (generative AI) model 210A. The trained model 210A can be for example but not limited to be hosted in a cloud server.

The generative Al model 210A can be a single stage model or comprise multiple stages. The data set used to train the model 210A at may be for example but not limited to the resources from the context database 226, historical event tickets, historical combination of the identified event and the corresponding response, response form the R and D team when the ticket is raised, historic data regarding Frequently asked questions (FAQs), etc. The generative Al model 210A can be for example but not limited to a Generative Adversarial Networks (GANs), Variational Autoencoders (VAEs) or Transformer-Based Models. The GAN is trained to create visual and multimedia artifacts from both imagery and textual input data. In case of the VAEs, the input data is encoded into a latent space and then decoded to generate new data and are used in tasks like anomaly detection. The transformer-based models use attention mechanisms to generate coherent and contextually accurate data (e.g., GPT-4). The transformer-based models comprise technologies such as Generative Pre-Trained (GPT) language models that can translate and use information gathered to create textual content.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present disclosure to the term "display" this refers generically either to a display screen on its own or to a screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein. In particular, the memory 206 includes a module arrangement 216 to perform steps for proposed solution of optimizing the virtual assistant 220A. Also, in the system 200, the memory 206 may be configured to store the data associated with or generated by the execution of the inventive steps.

In the present system 200, a user interface 218 is the UI of a configuration management application to configure the automation system. The UI 218 is a screen with which the user can interact and provide the inputs for configuring the automation system. The UI 218 includes a display, keyboard, touchscreen, tablet, and the like. The UI 218 displays a Guided User Interface (GUI) that includes the virtual assistant 220A. The virtual assistant 220A comprises a prompt window 220 where the user can provide queries related to configuration of the automation system. The virtual assistant 220A is for example an intelligent chatbot or an intelligent chat mechanism which is embedded directly into the configuration management application. This allows the virtual assistant 220A to continuously monitor user actions on the configuration management application and identify events that may require a response. The user may interact with the GUI via the UI 218 to generate the response for some specific events such as queries related to the configuration of the automation system or queries related to the configuration management application, etc. Further, a secure private instance of the model 210A is integrated into the virtual assistant 220A of the configuration management application.

Referring to FIGS 1 and 2 in combination, the various steps of the method 100 as described hereinafter may be executed in the system 200, or specifically in the processor 204 of the system 200, for - optimizing the virtual assistant 220A of the automation system. For purposes of the present disclosure, optimizing the virtual assistant 220A of the automation system in the present method 100 is embodied as an optimization algorithm for the virtual assistant 220A of the automation system. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes determining using the virtual assistant 220A, at least one event associated with configuration of the automation system. The virtual assistant 220A is embedded in the configuration management application of the automation system and therefore monitors each interaction of a user corresponding to the configuration of the automation system. Hence, the virtual assistant 220A determines the occurrence of the events associated with the configuration of the automation system. The event associated with configuration of the automation system includes a query related to the configuration of the automation system, an assistance request associated with engineering workflow in the configuration management application, and erroneous engineering workflow in the configuration management application. The events can be triggered by the user such as asking the query or asking for assistance, or the events can be automatically identified by the virtual assistant 220A such as monitoring a workflow and responding by generating a recommendation, or monitoring a workflow and identifying erroneous flow and responding by alerting the user and providing the correct workflow, etc.

In embodiments of the present disclosure, at step 102, the method 100 includes determining configuration parameters associated with the event. The virtual assistant 220A is also integrated with a machine learning model (ML) (not shown in the figures) for determining the configuration parameters. The ML model of the virtual assistant 220A is trained using multiple instances of configuration of different automation systems, events associated with the automation systems and the corresponding configuration parameters. The training data also includes details of various configuration management applications. Thus, the ML model is able to determine the configuration parameters as and when the events occur. Further, when a new automation system is added and the configuration parameters are used to configure the automation system, the virtual assistant 220A uses the data to train the ML model. As a result, the ML model is well trained and updated with the new set of data, which increases the efficiency of the determination of the configuration parameters associated with each event.

For example, consider that the event is a user query to the virtual assistant 220A requesting for automatically configuring a power distribution system such as a substation, using the configuration management application. In that case the configuration parameters could be defined by standards like IEC 61850 for specific hardware components that are used in the substation. Consider that the substation includes Intelligent Electronic Devices (IEDs) then the configuration parameters include protection settings such as for example but not limited to overcurrent thresholds, time-delay coordination, zone settings for distance protection, etc. Communication Addresses which includes but not limited to IP addresses, MAC IDs, and IEC 61850 Logical Node (LN) names. Sampling Rates such as analog input sampling, etc. These configuration parameters are automatically determined by the ML model based on the learning of the configuration of other substations over a period of time. It may be noted that though the examples are focusing on automation system related to power distribution domain, the proposed solution may not be restricted to the same and may be extended to all forms of automation system requiring configuration.

In embodiments of the present disclosure, at step 103, the method 100 includes determining at least one contextual element associated with the at least one event based on the at least one event and the configuration parameters. The at least one contextual element is determined by querying a context database 226 comprising multiple resources associated with a plurality of events. Once the configuration parameters are determined for the event, then a corresponding contextual element is fetched from the context database 226. The context database 226 is a collection of multiple resources associated with multiple events such as for example but not limited to at least one of automation system data, automation system logs, open editors, historic assistance requests associated with the automation system and corresponding resolution for each of the support request, a list of frequently requested assistance associated with the automation system, logs from a plurality of projects associated with the automation system, test automation suites associated with the automation system, user preference, documentation associated with at least one of: tools of the automation system, features, specifications, guidelines, standards associated with the automation system, protocols, or predefined best practices associated with the associated with the automation system and the automation application. Here, the contextual element is a resource from the context database 226 which is contextually associated with the configuration parameters and the determined event. For example, consider the event is a user query requesting for "information associated with standards that are relevant for configuration of the IEDs for communication using GOOSE messages." The configuration parameter associated with the communication between IEDs using the GOOSE messages include but are not limited to IEC 61850 Logical Node (LN) names, MAC address of the IEDs, IP address of the IEDs, etc. Then the contextual element is for example, the IEC 61850 standard's various release documentations, previous projects where a similar configuration is performed, FAQs on how to perform the configuration, etc. which are contextually associated with the event and the configuration parameters detected.

In embodiments of the present disclosure, at step 104, the method 100 includes generating a prompt engineering query based on the contextual element and applying the prompt engineering query to a trained model 210A. The trained model is a generative artificial intelligence model 210A. The prompt engineering query is a way of interacting with the trained model 210A and the trained model 210A generates a response based on that prompt engineering query. In general, the prompt query can be for example a statement, a question, or a combination of both. It sets the context and frames the task that the genAl model 210A should execute. The effectiveness of prompt queries depends on the ability of the system 200 to craft clear and informative prompts that elicit the desired response from the trained model 210A. Iterative refinement of the prompt queries helps to get the most useful outputs from the trained model 210A. The proposed solution includes the system 200 automatically generating the prompt engineering query based on the determined contextual element. Therefore, the prompt engineering query is generated using the contextual element based on context mapping. The context mapping in the context of Large Language Models (LLMs) or generative artificial intelligence model refers to the process of leveraging the contextual information (contextual element in the proposed solution) and relationships within the input data (relationships between the contextual elements and the events in the context database 226 in the proposed solution) to enhance the generative artificial intelligence model's understanding and generation capabilities. Here, the data in the context database 226 is pre-processed and context mapping is performed on the identified contextual elements prior to prompt generation to improve the quality and relevance of the generative artificial intelligence model's responses. The method includes identifying the contextual elements based on the analysis of the event, such as entities, relationships, and relevant background information. This contextual analysis can be done using techniques like named entity recognition, relation extraction, and topic modeling. Further, the based on the context mapping the relevant contextual elements are integrated. This integration of the contextual elements helps the generative artificial intelligence model to better understand the input and formulate more informed and relevant responses. The contextual information gathered through the analysis can be used to enrich the prompt engineering query to the generative artificial intelligence model. This can involve adding relevant context, background information, or specific instructions to the prompt engineering query, guiding the generative artificial intelligence model to generate responses that are tailored to the given context. Further, based on the context mapping, the prompt can be optimized to derive the desired type of response from the generative artificial intelligence model. The model is trained by using the resources from the context database 226.

In embodiments of the present disclosure, at step 105, the method 100 includes delivering guidance based on a customized response corresponding to the at least one event generated by the trained model based on the prompt engineering query. The guidance provides actionable insights to the automation system to enhance user experience. The guidance is displayed by the virtual assistant 220A on an interactive user interface of the automation application. Here, when the event is the query from the user related to the configuration of the automation system, then the guidance is an answer to that query. For example, if the query is "What is a relevant standard for configuring communication between two relays". Here, the user is not even be aware of the specific standards. Even then the virtual assistant 220A provides the guidance by executing the above-mentioned steps as "IEC 61850 delivers a way of substation design and offers a range of features and benefits for protection and control applications, which also includes peer-to-peer communication using GOOSE communication." In another scenario, the event may be an assistance request associated with the engineering workflow in the configuration management application. For example, the assistance request can be "Assistance required for configuring GOOSE communication between relays." Here the virtual assistant 220A provides the guidance by executing the above-mentioned steps as "To configure GOOSE communication between relays, you need to establish publishing and subscribing functionalities, typically within a station bus environment. Please click on the relevant action element from below list" and provide an actionable element list in the interactive UI of the automation application. The list could include below options:
1. Publishing GOOSE Messages
2. Subscribing to GOOSE Messages
3. Network Configuration
4. Testing and Verification.

Once the user selects one of the above options, there could be a tree like structure which could further provide elaborated options within each of the above mentioned options. For example, if the user selects 1. Publishing GOOSE Messages option. Then this option could further include:
1.1 Defining Data for publishing
1.2 Creating a GOOSE Control Block (GoCB)
1.3 Setting up the Publisher.

In an embodiment, consider that the event is that the virtual assistant 220A which is embedded in the configuration management application of the automation system identifies that the engineering workflow being executed by the user for configuration of a device is erroneous. Then, the trained model determines a corrective action to enable accurate engineering workflow and recommends the determined at least one accurate engineering workflow in real-time. For example, consider that the user is configuring GOOSE communication between two intelligent electronic devices (IEDs) and the virtual assistant 220A monitors that the user actions on the configuration management application. It identifies that subscriber IEDs were erroneously configured and the received GOOSE data which was supposed to trigger alarms was mapped to change states of the IEDs. In that case, the virtual assistant 220A provides the guidance to the user to the change the mapping of the specific functions at the subscriber IEDs. In the conventional methods and systems, the error in the configuration of the subscriber IEDs would have been identified only by the customer after the deployment, which could lead to potential damage to the IEDs or malfunctioning of the entire substation. Unlike to the conventional methods and systems, in the proposed solution the virtual assistant 220A that is embedded into the configuration management application automatically identifies the error and recommends the corrective action to the user. Therefore, the proposed solution ensures that the configuration process is highly efficient, highly accurate and error free.

Further, the method also includes displaying, by the processor 204, the conversational user interface of the virtual assistant 220A to enable a conversation between a user and the virtual assistant 220A and determining that the event is unresolved based on the conversation between the user and the virtual assistant 220A. Then the processor 204 receives the user input indicating generation of a ticket for resolution of the event and automatically generates the ticket for resolution of the event. When the ticket is generated then the proposed solution ensures that the entire conversation between the user and the virtual assistant 220A is appended to the ticket along with the corresponding logs associated with the event. Then the appropriate event resolution team or R and D is identified based on the event and the conversation of the user appended to the ticket. The processor 204 then automatically assigns the ticket for resolution of the event, to the appropriate event resolution team. As a result, the wait time for the user which would otherwise in conventional methods and systems was in days is reduced to a couple of minutes in the proposed solution, as the entire process of ticket generation and allocation of a service personnel is automated.

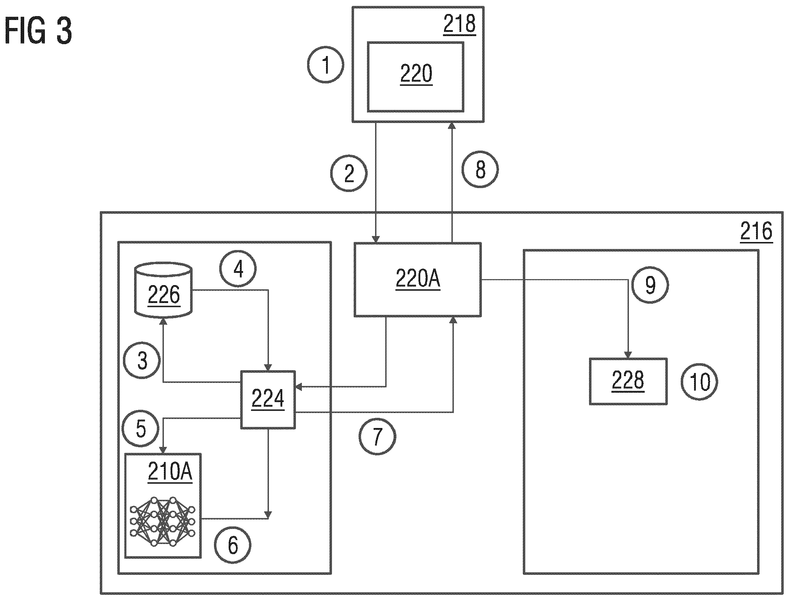

FIG 3 is an exemplary flow of the method for response generation and automatic ticket generation by the virtual assistant 220A of the automation system, in accordance with one or more embodiments of the present disclosure. Referring to the FIG. 3, at step 1, the virtual assistant 220A identifies the event associated with configuration of the automation system which could be an erroneous engineering workflow, or a query posed by the user. At step 2, the virtual assistant 220A which is integrated into the configuration management application sends the identified event to an application program interface (API) 224 which receives the event and sends the corresponding metadata associated with the event to the context database 226 (step 3). The API 224 is the link between the UI 218 and backend. The backend is a simple API call. Send query to the context database 226 and get data by context mapping (step 4). The context database 226 identifies resources which are relevant to the received event by the contextual mapping. The identified contextual elements prior to prompt generation is used to improve the quality and relevance of the model 210A's responses. Further, the prompt query generated is applied as a question to the model 210A (step 5) and get response to the API (step 6) and the API sends response to UI 218 (step 7 and 8).

Further, if the user is not satisfied with the response provided by the virtual assistant 220A, then the virtual assistant 220A allows ticket generation based on user intention through specific ticket generation portal 228. The virtual assistant 220A can also connect with the necessary team, allowing the team to respond without any explanation provided from the user as the details and chats have already been provided to the team by the virtual assistant 220A.

Therefore, the proposed solution provides an Al-powered virtual assistant 220A that is integrated within the configuration management application to manage customer queries, automate tasks, and enhance the user experience across various regions. The users can effortlessly inquire about documentation related to the configuration management application, technical issues, or request assistance from customer support. The virtual assistant 220A, provides accurate responses and facilitates the generation of tickets. It derives contextual understanding from system logs, open editors, previous customer tickets and resolution notes, standards, FAQs from customer support, logs from various projects and test automation suites, with a fallback mechanism for situations lacking such data. The relevant information is retrieved by the virtual assistant 220A from the context database 226, ensuring privacy and preventing the leakage of sensitive vendor-specific data. The use of public data is avoided to safeguard customer confidentiality and maintain data integrity.

Further, for tasks related to configuration, the virtual assistant 220A provides automatic configuration using the best available approach. The virtual assistant 220A also suggests corrections to an incorrect engineering process while the configuration is being done in real-time. If further support is needed, the virtual assistant 220A automatically generates a ticket to customer support and offer an effortless way to track its progress. Any technical details can also be requested at the user's fingertips when the virtual assistant 220A is integrated with the configuration management application, along with the capability to resolve and raise a ticket.

The virtual assistant 220A is integrated within each configuration management application and is trained on detailed customer documentation. This ensures that each configuration management application is equipped with a uniquely tailored virtual assistant 220A, providing users with precise and relevant support within their specific configuration environment. The context database 226 contains international standard documents from IEEE, IEC, ANSI, user manuals/documentation, and technical specifications of the product, which are used for training the model 220A to provide accurate responses. This training dataset is regularly enhanced and updated in line with evolving IEC, IEEE standards. All previous tickets raised, and their resolutions are also part of its training dataset to further improve response generation.

The proposed solution provides various advantages such as for example but not limited to the model 210A being cloud-hosted, is smoothly integrated with any configuration management application, enhancing its precision and accuracy in handling different use cases. The configuration management application aids in configuring the necessary engineering into the configuration management application for energy automation products, saving time and effort that would otherwise be spent on reading detailed documentation. The virtual assistant 220A is trained on standard documentation about different protocols and workflows from IEC, IEEE, the assistant can easily provide technical details and compare different versions of standards. The virtual assistant 220A can be used to create tickets for customer support for automation software products, streamlining the process and ensuring quick support for this high-value equipment. If an issue is not resolved via conversation with the virtual assistant 220A, the conversation along with the necessary logs are attached, and a ticket is generated. The user can track the status of the ticket seamlessly, making the process efficient. The virtual assistant 220A identifies any missteps during the configuration of a specific workflow, provide corrective suggestions, and handle situations more efficiently by being aware of all previously known customer issues and their resolutions.
While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

### Reference Numerals

| | |
|---|---|
| Method | 100 |
| Step | 101 |
| Step | 102 |
| Step | 103 |
| Step | 104 |
| Step | 105 |
| system | 200 |
| bus | 202 |
| processor | 204 |
| memory | 206 |
| interface | 208 |
| database | 210 |
| input device | 212 |
| output device | 214 |
| module arrangement | 216 |
| UI of simulation application | 218 |
| Virtual assistant | 220A |
| Prompt window | 220 |
| API | 224 |
| context database | 226 |
| ticket generation portal | 228 |
| step | 1 |
| step | 2 |
| step | 3 |
| step | 4 |
| step | 5 |
| step | 6 |
| step | 7 |
| step | 8 |
| step | 9 |
| step | 10 |

## Claims

1. A method (100) for optimizing virtual assistant (220A) of an automation system, the method (100) comprising:
determining, by a processor (204) using the virtual assistant (220A), at least one event associated with configuration of the automation system, wherein the virtual assistant is embedded in a configuration management application of the automation system;
**characterized by:**
determining, by the processor (204), configuration parameters associated with the at least one event;
determining, by the processor (204), at least one contextual element associated with the at least one event based on the at least one event and the configuration parameters;
applying, by the processor (204), a prompt engineering query to a trained model (210A), wherein the prompt engineering query is generated based on the at least one contextual element;
delivering, by the processor (204), guidance based on a customized response corresponding to the at least one event generated by the trained model (210A) based on the prompt engineering query, wherein the guidance provides actionable insights to the automation system to enhance user experience.

2. The method (100) according to claim 1, wherein the guidance is displayed by the virtual assistant (220A) on an interactive user interface of the automation application.

3. The method (100) according to claim 1, wherein the trained model (210A) is a generative artificial intelligence model.

4. The method (100) according to claim 1, wherein the at least one contextual element is determined by querying a context database (226) comprising a plurality of resources associated with a plurality of events.

5. The method (100) according to claim 4, wherein the plurality of resources associated with the plurality of events is at least one of automation system data, automation system logs, open editors, historic assistance requests associated with the automation system and corresponding resolution for each of the support request, a list of frequently requested assistance associated with the automation system, logs from a plurality of projects associated with the automation system, test automation suites associated with the automation system, user preference, documentation associated with at least one of: tools of the automation system, features, specifications, guidelines, standards associated with the automation system, protocols, or predefined best practices associated with the associated with the automation system and the automation application.

6. The method (100) according to claim 1, wherein the at least one event associated with configuration of the automation system is at least one of: a query related to the configuration of the automation system, an assistance request associated with at least one engineering workflow in the configuration management application, and at least one erroneous engineering workflow in the configuration management application.

7. The method (100) according to claim 1, the virtual assistant (220A) embedded to the configuration management application of the automation system monitors each interaction of a user corresponding to the configuration of the automation system, on the configuration management application and determines the at least one event associated with the configuration of the automation system.

8. The method (100) according to claim 1, wherein the configuration parameters associated with the at least one event is determined based on a machine learning model.

9. The method (100) according to claim 1, wherein the guidance to the at least one erroneous engineering workflow comprises:
determining, by the processor (204), at least one corrective action to enable accurate engineering workflow, by the trained model (210A); and
recommending by the processor (204), the at least one accurate engineering workflow in real-time.

10. The method (100) according to claim 1, further comprising:
determining, by the processor (204), the at least one event is unresolved based on a conversation between the user and the virtual assistant (220A); and
generating, by the processor (204), a customer support ticket based on the customized response generated by the trained model (210A), wherein the customer support ticket comprises at least one log corresponding to the at least one event and other relevant data to accelerate resolution of the at least one event.

11. The method (100) according to claim 1, further comprises:
regenerating, by the processor (204), the configuration of the automation system based on the customized response generated by the trained model (210A), wherein the regenerated configuration optimizes the automation system to reduce manual effort and mitigate errors.

12. The method (100) according to claim 10, further comprising:
determining, by the processor (204), at least one appropriate event resolution team based on the at least one event and the conversation of the user; and
assigning, by the processor (204), the customer support ticket for resolution of the at least one event, to the at least one appropriate event resolution team.

13. A system (200) for optimizing virtual assistant (220A) of an automation system, the system (200) comprising:
an application interface (218) of a configuration management application of the automation system;
a processor (204); and
a memory (206) coupled to the processor (204), wherein the memory (206) comprises a library of logic instruction blocks and instructions which, when executed by the processor (204), configures the processor (204) to:
determine using the virtual assistant (220A) at least one event associated with configuration of the automation system, wherein the virtual assistant (220A) is embedded in a configuration management application of the automation system;
**characterized by:**
determine configuration parameters associated with the at least one event;
determine at least one contextual element associated with the at least one event based on the at least one event and the configuration parameters;
apply a prompt engineering query to a trained model (210A), wherein the prompt engineering query is generated based on the at least one contextual element;
deliver a guidance based on a customized response corresponding to the at least one event generated by the trained model (210A) based on the prompt engineering query, wherein the guidance provides actionable insights to the automation system to enhance user experience.

14. A computer program product, comprising computer program code which, when executed by a processor (204), cause the processor (204) to carry out the method (100) of one of the claims 1 to 10.
